(19) **Europäisches Patentamt / European Patent Office / Office européen des brevets**

(11) **EP 2 194 795 B2**

(12) # NEW EUROPEAN PATENT SPECIFICATION
After opposition procedure

(45) Date of publication and mention of the opposition decision:
**02.03.2022 Bulletin 2022/09**

(45) Mention of the grant of the patent:
**07.01.2015 Bulletin 2015/02**

(21) Application number: **08803938.3**

(22) Date of filing: **10.09.2008**

(51) International Patent Classification (IPC):
**A23F 5/36** (2006.01)    **A23F 5/34** (2006.01)
**A23F 5/44** (2006.01)

(52) Cooperative Patent Classification (CPC):
**A23F 5/36; A23F 5/34**

(86) International application number:
**PCT/EP2008/061971**

(87) International publication number:
**WO 2009/040249 (02.04.2009 Gazette 2009/14)**

(54) **INSTANT DRINK POWDER**

INSTANTGETRÄNKPULVER

POUDRE DE BOISSON INSTANTANÉE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.09.2007 US 976229 P**

(43) Date of publication of application:
**16.06.2010 Bulletin 2010/24**

(60) Divisional application:
**13186814.3 / 2 689 668**

(73) Proprietor: **Société des Produits Nestlé S.A.
1800 Vevey (CH)**

(72) Inventors:
- **KESSLER, Ulrich
  CH-1073 Savigny (CH)**
- **DUFFEY, Jean-Louis
  F-74500 Lugrin (FR)**
- **DREYER, Marc, Georges
  CH-1822 Chernex (CH)**
- **KAUTER, Michael, Desmond
  Black Mountain
  Queensland 4563 (AU)**
- **SUDHARSAN, Mathalai, Balan
  CH-1004 Lausanne (CH)**
- **CHANVRIER, Hélène, Michèle, Jeanne
  F-88000 Epinal (FR)**
- **WEHRSPANN, Olaf
  CH-1350 Orbe (CH)**
- **FU, Xiaoping
  Dublin
  OH 43016 (US)**

(74) Representative: **Plougmann Vingtoft a/s
Strandvejen 70
2900 Hellerup (DK)**

(56) References cited:
| | |
|---|---|
| EP-A- 0 839 457 | EP-A1- 0 387 950 |
| EP-A1- 1 627 572 | EP-B1- 0 652 766 |
| WO-A-97/33482 | WO-A-02/062152 |
| WO-A1-94/03198 | WO-A1-2007/097626 |
| CA-A- 984 216 | GB-A- 1 498 119 |
| US-A- 2 788 276 | US-A- 3 185 580 |
| US-A- 3 222 193 | US-A- 3 320 074 |
| US-A- 3 749 378 | US-A- 5 882 717 |

- BELL, R. W.; HANRAHAN, F. P.; WEBB, B. H.: "Foam Spray Drying Methods of Making Readily Dispersible Nonfat Dry Milk", JOURNAL OF DAIRY SCIENCE, vol. XLVI, no. 12, December 1963 (1963-12), pages 1352-1356,
- "Anhydro Dosing System", PRODUCT BROCHURE FROM ANHYDRO A/S, 4 September 2007 (2007-09-04),
- "CPS Injection and Dosing Units", CPS COMPANY BROCHURE, 2003,
- "Foam Spray Drying", POWERPOINT PRESENTATION BY CARLISLE PROCESS SYSTEMS, 2003,
- 'AFFIDAVIT FROM CARSTEN JUHL JESSEN AND SOREN FREDSTEDT'
- 'CATALOGUE, PART 1 OF ACHEMA 2003'
- 'CATALOGUE, PART 2, OF ACHEMA 2003'
- BELLINGHAUSEN, RAINER ET AL: "Trockner", CHEMIE INGENIEUR TECHNIK, vol. 75, no. 11, 2003,
- 'Picture of CPS stand at Achema 2003'

**(Cont. next page)**

- 'Picture of CPS stand at Achema 2003, showing an injection dosing unit'
- 'Document properties for CPS company brochure "CPS INJECTION AND DOSING UNITS"'
- 'Document properties for Powerpoint presentation entitled "Foam Spray Drying"'
- 'Spray Drying Technology' CARLISLE FRIESLAND B.V. COMPANY BROCHURE
- K. Masters: "Spray Drying Practice", 2002, SprayDryConsult International ApS, Charlottenlund, DK pages 375-376,
- LÖHN, MIRKO: "Partikeleigenschaften gezielt beeinflussen: Möglichkeiten bei der Sprüh- und Sprühbandtrocknung", VERFAHRENS TECHNIK, December 2000 (2000-12),
- 'About Tetra Pak CPS: Company History', [Online] Retrieved from the Internet: <URL:http://www.tetrapakcps.com/index.php?pagecode=company_history> [retrieved on 2013-09-11]
- E Crosby et al: "Foam Spray Drying: General Principles", , pages 82-94,

## Description

### Field of the invention

The present invention relates to an instant drink powder, preferably an instant coffee powder, which upon reconstitution provides improved foaming. The present invention also relates to the use of the powder for the preparation of an instant drink, as well as to the method of manufacturing said powder.

### Background of the invention

Numerous methods have been described to improve the foam formation on instant beverages. For instance WO 97/33482 relates to a soluble coffee beverage powder which comprises a gas containing soluble whitener powder and a soluble coffee powders. EP 0 154 192 B2 and GB 2 154 422 A describe a way to obtain a foaming beverage by adding water to a pulverant material having a protein/lactose weight ratio of 1/3 to 1/5 and comprising stabilizing salts.

Foaming creamers are also disclosed in US 4, 438,147. A method for increasing the foaming capacity of spray-dried powders is given in EP 1 627 572 whereby amorphous particles of a powdered soluble composition having internal voids are filled with a gas. Another way to fill internal voids with pressurised gas in order to give a foaming soluble coffee powder is given in EP 1 627 568. Soluble coffee beverage having a foamed upper surface is described in US 6, 964, 789.

Most of the prior art deals with beverages having a creamer component, which upon reconstitution provides the froth and foam desired. However, fewer citations relate to instant beverages which do not comprises la creamer component and which are yet foamy on the upper surface. Such a beverage composition is described in US 5, 882, 717 and EP 0 839 457 for example. EP 0 839 457 discloses a method wherein a coffee extract is foamed by injection of a gas and then spray dried to form a powder. The reconstituted coffee beverage is said to have an improved in-cup foam which simulates the foam formed on espresso made from roasted and ground espresso coffee (called "crema").

There is thus still room for improvement in the field of foamy instant beverages.

### Object of the present invention

It is therefore an object of the present invention to improve the stability and amount of roam produced when reconstituting an instant beverage powder.

### Summary of the invention

Accordingly, this need is solved by the features of the independent claims. The dependent claims further develop the central idea of the invention.

Thus, in a first aspect, the present invention relates to an instant coffee or coffee/chicory mixture powder comprising porous powder particles characterised in that the powder particles have a porosity of at least 65%, and wherein the powder particles have pores having an average diameter $D_{50}$ of between 10 and 60 microns, and the pores have a size distribution span factor of less than 4.

The use of a power according to the invention for the preparation of an instant drink also forms part of the present invention.

A third aspect of the invention pertains to a method for the manufacture of an instant coffee or coffee/chicory mixture powder comprising the steps of:

a. Subjecting a instant drink extract to a pressure of 50 to 400 bar, preferably of 150 to 400 bar
b. Adding gas to the pressurised extract,
c. Spraying and drying the extract to form an instant drink powder.

### Figures

The present invention is further described hereinafter with reference to some of its embodiments shown in the accompanying drawings in which:

- Figure 1. illustrates the particle porosity of products according to the invention (PI I and PI II) and the particle porosity of prior art products (PA I, PA II and PA III),

- Figure 2 is a diagram showing average pore diameter ($D_{50}$) of the particle void space distribution and the span of same distribution (($D_{90}$ - $D_{10}$ / $D_{50}$) for products of the invention (PI I, PI II) and for prior art products (PA I, PA II, PA III),

- Figure 3 depicts the amount of crema as a function of porosity for products of the invention (PI I, PI II) and for prior art products (PA I, PA II, and PA III),

- Figure 4 is a sketch depicting a method for producing the powder of the invention,

- Figure 5 is a drawing of a device for measuring the amount of crema formed upon reconstitution of a beverage powder. The inner diameter of the reconstitution vessel is 71 mm, the inner height 77.5 mm, the height of the lid is 65 mm, and

- Figure 6 is two cross-sections of a layer of typical coffee particles of the invention at two different magnifications, obtained by X-ray tomography. The scale bars represents 500 microns (upper image) and 250 microns (lower image) respectively.

## Detailed description of the invention

The present invention relates to instant coffee or coffee/chicory mixture compositions with improved crema. By "crema" is meant the fine foam formed on the surface of a liquid. Crema is for example observed upon extraction of roasted and ground coffee under high pressure with special coffee machines.

In the following description, reference is made to instant coffee compositions as a preferred embodiment.

By instant drink composition is meant a dried, soluble powder composition which can be reconstituted by addition of a liquid, e.g. hot or cold water, milk, juice etc.

The instant powder of the invention comprises porous powder particles which are characterised in that the powder particles have a porosity of at least 65%, preferably at least 70%. In a preferred embodiment, the powder particle porosity is between 65 and 85%, more preferably between 65 and 80%, even more preferably between 70 and 80%, most preferably between. 70 and 75%.

Porosity can be measured by means known in the art. For instance, the porosity can be measured by the following equation:

$$\frac{Vp - Vcm}{Vp} \cdot X \cdot 100$$

wherein Vp is the volume of the particle and Vcm is the volume of the coffee matrix in the particle. These values may be determined by standard measurements such as mercury porosimetry or also by x-ray tomographyic technique.

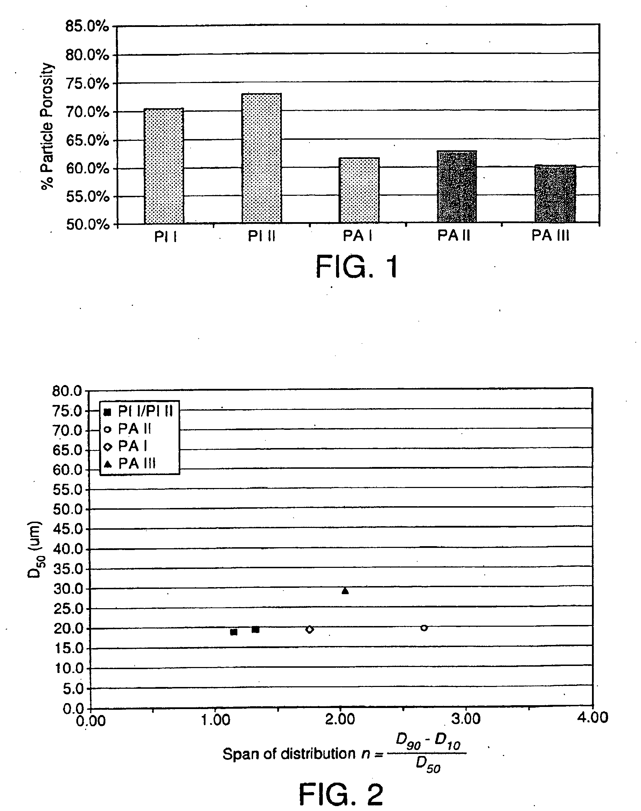

The powder of the invention is therefore characterised by its high, porosity in comparison with known: products (see Fig. 1). Not only does the high porosity contribute to the good solubility of the powder of the invention, but it also allows an increased amount of crema to be formed upon reconstitution of the powder.

The pores of the present powder have an average diameter $D_{50}$ of between 10 and 60 microns, preferably less than 60 microns, more preferably less than 40 microns, most preferably less than 25 microns. The void space distribution in the particles is measured by X-ray tomography. The pore size characterising the present powder is larger than that described in US 5,882,717. Surprisingly, however, it has been found that larger pore sizes still provide a fine and generous crema in the final reconstituted product.

The powder of the invention may also be characterised by the span of the void space distribution in the particle, which is obtained from X-ray tomography. The span of the distribution is calculated by the following equation:

$$\text{Span} = \frac{D_{90} - D_{10}}{D_{50}}$$

Wherein $D_{90}$, $D_{10}$ and $D_{50}$ represents the diameters where 90%, 10% and 50%, respectively, of the particle volume is in particles with a size below this value. Thus, a distribution span factor (n) of less than 4, preferably less than 3, more preferably less than 2, most preferably less than 1.5 characterises the pores of the powder according to the invention. The lower the span factor (n), the more uniform and sharp is the size distribution. Thus, the products of the invention are characterised by a sharper size distribution than the prior art products (cf. Fig. 2).

The particle size of the powder particles may e.g. be characterised by the median particle diameter (volume distribution), $X_{50}$. $X_{50}$ is preferably in the range between 50 and 500 microns, such as e.g. between 100 and 300 microns, or between 150 and 250 microns.

The advantages conferred by these characteristics upon the powders of the invention include increased crema and stability of the crema upon reconstitution of the powder in a liquid.

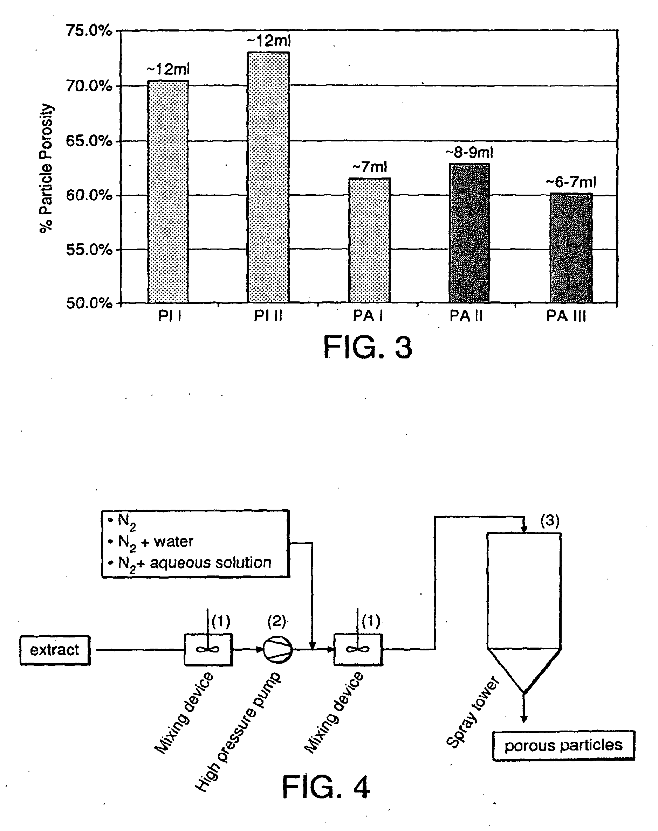

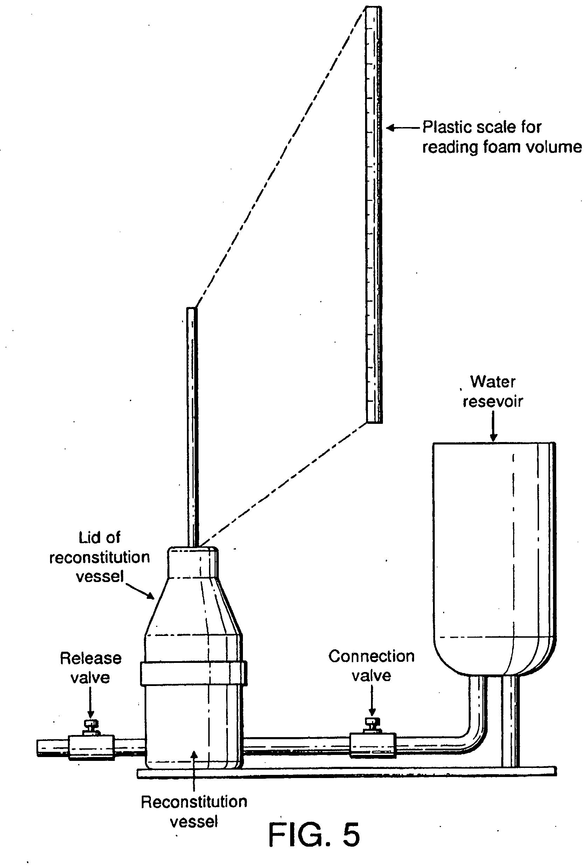

In a first aspect, it has been found that the increased porosity provides an instant beverage with an increased solubility and amount of crema. Fig. 3 shows that all prior art products (PA I, PA II and PA III) which have a lower porosity than the products of the invention (PI I and II) correspondingly produce a lower amount of crema. The amount of crema produced can measured with a simple device (Figure 5) consisting of a reconstitution vessel connected to a water reservoir, which is initially blocked off with a valve. After reconstituting the instant beverage in the vessel (5 g of powder with 200 ml of deionised water at 85°C for all results mentioned here), the reconstitution vessel is closed with a special lid that ends in a scaled capillary. The valve between the reconstitution vessel and the water reservoir is then opened and the water (standard tap water of any temperature) pushes the reconstituted beverage upwards into the capillary, thus facilitating the reading of the crema volume.

The prior art products were shown to produce about 6 to 9mL of crema according to this measurement method, while the product of the invention, upon reconstitution, produced over 10mL of crema.

It is also thought that a narrow size distribution of the pore size confers stability to the crema which is not observed in prior art products. More surprisingly, it has been found that a combination of the pore size as defined above, with a narrow size distribution and with a high porosity confers to the reconstituted product improved organoleptic properties in terms of texture of the foam, stability and amount.

Although it is not excluded by the present invention, the presence of creamer, lactic proteins, fat, stabilising salts etc. which has been used in many of the products of the prior art to provide a foamy product, is not necessary. A foamy drink may thus be obtained without the use of any additives, by simply modifying the above-mentioned parameters of the powder particles. In one embodiment a beverage powder of the invention comprises a creamer and/or a whitener.

The use of the powder of the invention for the preparation of an instant drink is thus provided. Preferably, the instant drink is coffee. The reconstitution of the powder of the invention in a liquid provides an instant drink having a crema of at least 10mL (when using 5 g of powder in 200 ml of water). This is a considerable improvement over known products as shown in Fig. 3.

A method to prepare the present instant drink powder is illustrated in Fig. 4. In a first step, an instant drink extract is subjected to high-pressure, typically 50 to 400 bar, preferably 150 to 350 bar. Prior and/or after the high-pressure pump (2), the extract may be mixed in a mixing device (1). The instant drink is thus conveyed to an atomisation nozzle (3) with a high-pressure pump (2). In a preferred embodiment, the extract is a coffee extract having a dry matter content of 35 to 70% at a temperature of 10 to 70°C, preferably 30 to 70°C. It may be advantageous to keep the oil content of the coffee extract low.

Gas is added to the pressurised extract, e.g. in one embodiment between the high-pressure pump (2) and the atomization nozzle (3). In another embodiment gas is added to the extract before the high pressure pump. Typically, the gas is selected from nitrogen, carbon dioxide, nitrous oxide or argon. Preferably it is nitrogen. The quantity of added gas is controlled in such a way that the entire gas is solubilised in the extract. The gas may be added with water or an aqueous solution. Thus, the water or aqueous solution may be saturated or oversaturated with said gas. In that case, the water or aqueous solution is added to the pressurised extract. The water or aqueous solution may further comprise aromas, foam enhancing, foam stabilising components etc. A static mixer or a rotating stirring/mixing device (1) can be used to ensure a constant concentration of the dissolved gas.

The pressurised extract is then sprayed at the atomisation nozzle (3). Due to the rapid pressure drop at the atomisation nozzle, the dissolved gas degasses and forms gas bubbles in the sprayed droplets. The tower temperature during spray drying may e.g. be between 70 and 115°C. The porous structure of the resulting instant drink powder is then solidified by heat (spray-drying).

The present invention is further illustrated by the following non-limiting example.

**Examples**

Instant drink powders of the invention were produced by:

- Extracting a 85 % Robusta blend of coffee with standard soluble coffee processing technology, then concentrating the extract to a solid matter content of 45 to 55 %.

- Heating the extract to a temperature between 50 and 60°C and pressurising it to between 130 and 160 bar at between 600 and 800 kg/h extract flow rate. Injecting 1-3 (e.g. 1.3 or 2.0) Nl/kg solids of Nitrogen into the pressurised extract at 150 bar leading to solubilisation of the Nitrogen.

- Spray-drying the extract at 70-90°C tower temperature.

**Mercury porosimeter to evaluated particle porosity**

AutoPore IV 9520 was used for the structure evaluation (Micromeritics Inc. Norcrose, GA, USA). The operation pressure for Hg intrusion was from 2757.9 to 620528 Pa (0.4 psia to 90 psia) (with low pressure from 2757.9 to 275790 Pa (0.4psia to 40psia) and high pressure port from 137895 to 620528 Pa (20 to 90 psia). The pore diameter under this pressure ranged from 500 to 2 um.

About 0.1 to 0.4 g of samples was precisely weighted and packed in a penetrometer (volume 3.5 ml, neck or capillary stem diameter 0.3 mm and stem volume of 0.5 ml).

After the penetrometer inserted to the lower pressure port, sample was evacuated at 7584.2 Pa/min (1.1 psia/min), then switch to a medium rate at 3447.4 (0.5 psia) and a fast rate at 900 $\mu$m Hg. The Evacuating target is 60 $\mu$m Hg. After reaching the target, the evacuation was continued for 5 min before Hg was filled in.

The measurement was conducted in set-time equilibration. That, is, the pressure points at which data are to be taken and the elapsed time at that pressure in the set-time equilibration (10 sec) mode. Roughly 140 data points were collected at the pressure ranges.

The bulk volume of the sample is obtained from the initial volume of mercury and the sample holder. The volume of the inter particle voids is obtained after intrusion with mercury up to $2\mu$m. Subtraction of the inter particle voids from the bulk volume of the sample gives the volume of the particles. The volume of the void space in the particle is obtained by subtracting the volume of the coffee matrix from the volume of the particles. The volume of the coffee matrix is obtained from the weight of the sample and coffee matrix density. The particle porosity is the ratio of voids volume in the particle to that of the volume of the particle.

**Determination of the internal structure of coffee particles by microcomputed X-ray tomography and 3D image analysis**

**Images acquisition**

X-ray tomography scans were performed with a 1172 Skyscan MCT (Antwerpen, Belgium) with a X-ray beam of 80KV and 100uA. Scans were performed with the Skyscan software (version 1.5 (build 0) A (Hamamatsu 10Mp camera), reconstruction with the Skyscan recon software (version 1.4.4).

Coffee particles were scanned in a polystyrene tube (1.6 mm diameter, 2 mm height, or a sticky tape (maximum 4mm diameter) was covered by a layer of coffee particles and scanned. For a pixel size of 1um, the camera was set up at 4000x2096 pixels and placed in the Far position. Exposure time was 2356 ms. Scan was performed over 180°, the rotation step was 0.3° and the frame averaging was 4.

The reconstruction of the dataset was performed over 400 slices in average, with the settings contrast at 0.008-0.22. Smoothing and ring artefact reduction were set up at 1 and 5, respectively.

**3D analysis of the images**

3D image analysis was performed on the 1 um per pixel datasets with CTAn software (version 1.7.0.3, 64-bit). The analysis was performed in two steps: (i) a first step to select the particles to be analysed by excluding the inter particles voids, (ii) the second step to obtain the distribution of the porosity of the particles. The particle porosity value obtained by this technique matches closely the mercury porosimetry.

(i) Selection of the particles, i.e. volume of interest:

The images of 1um per pixel resolution in grey levels (255 grey levels) were segmented at a grey level of 30, cleaned by removing any single spots smaller than 16 pixels, and then dilated by mathematical morphology (radius of 3 pixels). The selection of the volume of interest was performed through the shrink-wrap function, and then this volume was eroded by mathematical morphology (radius of 3 pixels) to adjust to the surface of the particles.

(ii) Void space distribution in the particles:

The images in grey levels were reloaded and segmented at a grey level of 40. The particles porosity was then calculated as the ratio of the volume of pores out of the particles volume, the particles volume being equal to the volume of interest defined above (i). The structure separation gave the particles pores size distribution.

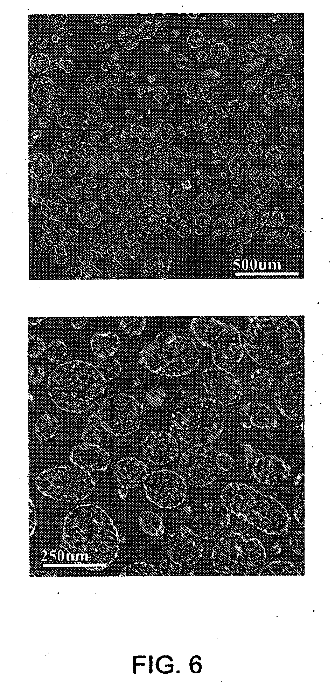

Beverage powders were produced by the method described above and characterised by the methods described above. The results are given in figures 1, 2 and 3, wherein PI I and PI II are beverage powders of the invention produced from coffee extract, and PA I, PA II and PA III, are beverage powders produced from coffee extract by prior art methods. PA II and PA III are commercial soluble coffee powders marketed as providing an espresso beverage with good crema. Figure 6 show typical examples of the structure of coffee beverage particles of the invention.

**Claims**

1. Instant coffee or coffee/chicory mixture powder comprising porous powder particles **characterized in that** the powder particles have a porosity of at least 65%, and wherein the powder particles have pores having an average diameter $D_{50}$ value of between 10 and 60 microns, and the pores have a size distribution **characterized by** a distribution span factor of less than 4.

2. Powder according to claim 1, wherein the powder particle porosity is between 65 and 85%, more preferably between 65 and 80%, even more preferably between 65 and 75%, most preferably between 70 and 75%.

3. Powder according to any of the preceding claims, wherein the powder particles have pores having an average diameter $D_{50}$ value of between 10 and 40 microns, more preferably between 10 and 25 microns.

4. Powder according to any of the preceding claims further comprising a creamer and/or whitener.

5. Use of a powder according to any of claims 1 to 4, for the preparation of an instant drink.

6. Use according to claim 5, wherein the instant has a crema of at least 10 mL when using 5 g of powder in 200 ml of 85°C deionized water.

7. Use according to any of claims 4 or 5, wherein the instant drink is coffee.

8. Method for the manufacture of an instant coffee or coffee/chicory mixture powder comprising the steps of:

   a. Subjecting an instant coffee or coffee/chicory mixture extract to a pressure of 50 to 400 bar, preferably 150 to 400 bar,
   b. Adding gas to the pressurised extract, and
   c. Spraying and drying the extract to form an instant drink powder.

9. Method according to claim 8, wherein the gas is selected from nitrogen, carbon dioxide, nitrous oxide, preferably nitrogen.

10. Method according to any of claims 8 or 9, wherein the gas is added with water or an aqueous solution.

11. Method according to any of claims 8 to 10, wherein the water or aqueous solution comprises aromas, foam enhancing, foam stabilising components etc.

12. Method according to any of claims 8 to 11, wherein the water or aqueous solution is saturated or oversaturated with gas.

13. Method according to any of claims 8 to 12, wherein the drying is spray-drying.

**Patentansprüche**

1. Instant-Pulver aus Kaffee oder einer Kaffee-/Zichorienmischung, umfassend poröse Pulverpartikel, **dadurch gekennzeichnet, dass** die Pulverpartikel eine Porosität von mindestens 65 % aufweisen, und wobei die Pulverpartikel Poren mit einem durchschnittlichen Durchmesser $D_{50}$ zwischen 10 und 60 Mikrometer aufweisen, und die Poren eine Größenverteilung aufweisen, die **durch** einen Spannweitenfaktor von weniger als 4 **gekennzeichnet** ist.

2. Pulver nach Anspruch 1, wobei die Pulverpartikelporosität zwischen 65 und 85 %, mehr bevorzugt zwischen 65 und 80 %, noch mehr bevorzugt zwischen 65 und 75 %, am meisten bevorzugt zwischen 70 und 75 % liegt.

3. Pulver nach einem der vorstehenden Ansprüche, wobei die Pulverpartikel Poren mit einem durchschnittlichen Durchmesser $D_{50}$ zwischen 10 und 40 Mikrometer, mehr bevorzugt zwischen 10 und 25 Mikrometer aufweisen.

4. Pulver nach einem der vorstehenden Ansprüche, ferner umfassend Kaffeesahne und/oder Kaffeeweißer.

5. Verwendung eines Pulvers nach einem der Ansprüche 1 bis 4 zur Herstellung eines Instant-Getränkes.

6. Verwendung nach Anspruch 5, wobei das Instant eine Crema von mindestens 10 ml aufweist, wenn 5 g Pulver in 200 ml, 85 °C heißem, vollentsalztem Wasser eingesetzt werden.

7. Verwendung nach einem der Ansprüche 4 oder 5, wobei es sich bei dem Instant-Getränk um Kaffee handelt.

8. Verfahren zur Herstellung eines Instant-Pulvers aus Kaffee- oder einer Kaffee-/Zichorienmischung, umfassend die Schritte:

    a. Aussetzen eines Instant-Extrakts aus Kaffee- oder einer Kaffee-/Zichorienmischung einem Druck von 50 bis 400 bar, vorzugsweise 150 bis 400 bar,
    b. Hinzufügen von Gas zu dem unter Druck stehenden Extrakt, und
    c. Besprühen und Trocknen des Extrakts, um ein Instant-Getränkepulver zu bilden.

9. Verfahren nach Anspruch 8, wobei das Gas aus Stickstoff, Kohlendioxid, Stickstoffoxid, vorzugsweise Stickstoff, ausgewählt ist.

10. Verfahren nach einem der Ansprüche 8 oder 9, wobei das Gas mit Wasser oder einer wässrigen Lösung hinzugefügt wird.

11. Verfahren nach einem der Ansprüche 8 bis 10, wobei das Wasser oder die wässrige Lösung Aromen, Komponenten zur Schaumverstärkung und Schaumstabilisierung usw. umfasst.

12. Verfahren nach einem der Ansprüche 8 bis 11, wobei das Wasser oder die wässrige Lösung mit Gas gesättigt oder übersättigt ist.

13. Verfahren nach einem der Ansprüche 8 bis 12, wobei es sich bei der Trocknung um Sprühtrocknung handelt.

**Revendications**

1. Poudre de mélange de café/chicorée ou de café instantané comprenant des particules de poudre poreuses **caractérisée en ce que** les particules de poudre ont une porosité d'au moins 65 %, et dans laquelle les particules de poudre ont des pores ayant une valeur de diamètre $D_{50}$ moyenne entre 10 et 60 microns, et les pores ont une distribution porométrique **caractérisée par** un facteur d'étendue de distribution inférieur à 4.

2. Poudre selon la revendication 1, dans laquelle la porosité de particule de poudre est entre 65 et 85 %, plus préférablement entre 65 et 80 %, encore plus préférablement entre 65 et 75 %, le plus préférablement entre 70 et 75 %.

3. Poudre selon l'une quelconque des revendications précédentes, dans laquelle les particules de poudre ont des pores ayant une valeur de diamètre $D_{50}$ moyenne entre 10 et 40 microns, plus préférablement entre 10 et 25 microns.

4. Poudre selon l'une quelconque des revendications précédentes comprenant en outre un succédané de crème et/ou un agent de blanchiment.

5. Utilisation d'une poudre selon l'une quelconque des revendications 1 à 4, pour la préparation d'une boisson instantanée.

6. Utilisation selon la revendication 5, dans laquelle l'instantané a une crème d'au moins 10 ml lors de l'utilisation de 5 g de poudre dans 200 ml d'eau désionisée à 85 °C.

7. Utilisation selon l'une quelconque des revendications 4 ou 5, dans laquelle la boisson instantanée est du café.

8. Procédé pour la fabrication d'une poudre de mélange de café/chicorée ou de café instantané comprenant les étapes consistant à :

   a. Soumettre un extrait de mélange de café/chicorée ou de café instantané à une pression de 50 à 400 bars, de préférence 150 à 400 bars,
   b. Ajouter du gaz à l'extrait sous pression, et
   c. Pulvériser et sécher l'extrait pour former une poudre de boisson instantanée.

9. Procédé selon la revendication 8, dans lequel le gaz est choisi parmi l'azote, le dioxyde de carbone, l'oxyde nitreux, de préférence l'azote.

10. Procédé selon l'une quelconque des revendications 8 ou 9, dans lequel le gaz est ajouté avec de l'eau ou une solution aqueuse.

11. Procédé selon l'une quelconque des revendications 8 à 10, dans lequel l'eau ou la solution aqueuse comprend des arômes, des composants améliorant la mousse, stabilisant la mousse, etc.

12. Procédé selon l'une quelconque des revendications 8 à 11, dans lequel l'eau ou la solution aqueuse est saturée ou sursaturée avec du gaz.

13. Procédé selon l'une quelconque des revendications 8 à 12, dans lequel le séchage est un séchage par pulvérisation.

FIG. 1

Span of distribution $n = \dfrac{D_{90} - D_{10}}{D_{50}}$

FIG. 2

FIG. 3

FIG. 4

Plastic scale for
reading foam volume

Water
resevoir

Lid of
reconstitution
vessel

Release
valve

Connection
valve

Reconstitution
vessel

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9733482 A
- EP 0154192 B2
- GB 2154422 A
- US 4438147 A
- EP 1627572 A

- EP 1627568 A
- US 6964789 B
- US 5882717 A
- EP 0839457 A